# EUROPÄISCHE PATENTSCHRIFT

(11) **EP 0 361 188 B1**
(45) Veröffentlichungstag und Bekanntmachung des Hinweises auf die Patenterteilung: **13.07.1994**
(21) Anmeldenummer: 89116759.5
(22) Anmeldetag: 09.09.1989
(51) Int. Cl.: G01S 17/88, G01S 7/48

(54) **Verfahren zum Schutz eines Fahrzeugs gegen Kollisionen und Kollisionsgeschütztes Fahrzeug**
Method for safeguarding a vehicle against collision, and vehicle so safeguarded
Procédé de protection d'un véhicule contre des collisions et véhicule protégé des collisions

(30) Priorität: 29.09.1988 DE 3833022
(43) Veröffentlichungstag der Anmeldung: 04.04.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Kugler, Hans Peter, D-7519 Zaisenhausen (DE); Sinn, Frank, D-7507 Pfinztal 1 (DE); Steimle, Claudia, D-7593 Ottenhöfen (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 170 038
- GB-A- 2 151 872
- US-A- 3 781 111
- US-A- 4 119 379
- US-A- 4 184 748
- PATENT ABSTRACTS OF JAPAN, Band 9, Nr. 127 (P-360)[1850], 31. Mai 1985;& JP-A-60 11 186 (MATSUSHITA DENKO K.K.) 21-01-1985

## Beschreibung

Die Erfindung betrifft ein Verfahren zum Schutz eines Fahrzeugs gegen Kollisionen, wobei der Fahrweg des Fahrzeugs vor diesem beleuchtet wird und das reflektierte Licht zur Erzeugung von Steuerbefehlen detektiert wird, sowie ein kollisionsgeschütztes, insbesondere fahrerloses Fahrzeug mit einer Kollisionsschutzeinrichtung mit einer Lichtquelle, dessen Licht zumindestens nach Austritt aus dem Fahrzeug schräg zum Boden hin gerichtet ist, mit einem Empfänger für vom Boden reflektiertes Licht und einer diesem nachgeordneten Auswerteeinrichtung, wobei die Lichtquelle ein Laser ist.

Der klassische Kollisionsschutz für automatisierte Transportfahrzeuge ist ein Auffahrbügel. Berührt dieser ein Hindernis, so wird ein Endschalter betätigt und das Fahrzeug durch einen Notstop zum Stillstand gebracht. Eine Weiterbildung dieses "Notstop-Prinzips" sieht einen Lichtleiter aus einem Glasfaserkern mit hohem Brechungsindex sowie einem Mantel mit geringerem Brechungsindex vor. Um den Leiter kann eine Kunststoffspirale gewickelt sein. Wird ein Druck auf diese ausgeübt, so bewirkt dies eine schlangenförmige Krümmung des Leiters, so daß schon bei geringer Verformung der größte Teil des in den Lichtwellenleiter eingespeisten Lichts verlorengeht, da der Grenzwinkel der Totalreflexion unterschritten wird, so daß Licht den Leiter verlassen kann. Erhält derart eine an einem Ende des Lichtleiters angebrachte Auswerteelektronik weniger Licht, so wird hierdurch der Antrieb des Fahrzeugs abgeschaltet. Es wurde weiterhin ein Kollisionsschutz mit zwei durch eine gelochte elastische Isolierschicht getrennten leitfähigen Folien in einer Ummantelung vorgeschlagen. Bei Druckeinwirkung berühren sich die beiden Folien, so daß von der einen zur anderen Folie ein Arbeitsstrom fließen kann, was durch eine Auswerteelektronik zum Stillsetzen des Fahrzeugs ausgewertet wird.

Alle diese Vorrichtungen werden erst bei Auftreffen des Fahrzeugs auf ein Hindernis wirksam und erfordern ein sofortiges Stillsetzen des Fahrzeugs mittels eines "Notstops". Empfindliche Hindernisse können beschädigt werden. Auch kann bei einem "Notstop" empfindliche Ladung auf dem Fahrzeug verrutschen oder ebenfalls beschädigt werden.

Es wurde weiterhin schon vorgeschlagen, mit einem Ultraschallsender und -empfänger zu arbeiten. Dieses Meßverfahren ist aber fehleranfällig und von der Art und insbesondere dem Werkstoff des Hindernisses abhängig.

Die US-A-3 781 111 zeigt einen Detektor zum Feststellen von Hindernissen im Nahbereich mit wenigen, nämlich 5, nebeneinander angeordneten Laserdioden, einem punktförmigen Detektor und einem vor beiden angeordneten Drehspiegel, um mittels diesem einen größeren Bereich zu überstreichen.

In azimutaler Richtung ergeben sich daher fünf separate Strahlen, mit diskreten Auftreffpunkten, mit einem Abstand von etwa 0,5 m bei 7 m Entfernung. Es erfolgt ein Scannen mittels des Spiegels 12 in Elevationsrichtung, so daß hierdurch ein größerer Entfernungsbereich abgedeckt wird. Während eines Abtastvorganges durch den Spiegel ist nur eine Laserdiode eingeschaltet, so daß also auch die Laserdioden nicht gleichzeitig eingeschaltet sind.

Das ganze Verfahren ist mehr als aufwendig, darüber hinaus unsicher, da durchaus in Zwischenbereichen zwischen den Auftreffpunkten von 0,5 m Hindernisse auftreten können oder aber in an sich von Laserdioden beleuchtbaren Bereichen, wenn diese gerade nicht leuchten. Darüber hinaus ist auch die Aufnahme mittels einer einzigen punktförmigen Photodiode nicht hinreichend zuverlässig. Insgesamt handelt es sich hier um ein frühes, rudimentäres Verfahren, das kaum praktikabel ist und kaum sichere Überwachungsergebnisse liefern kann, insbesondere bei in Fabriken fahrenden kollisionsgeschützten Fahrzeugen.

Die US-A-4 119 379 zeigt lediglich eine Vorrichtung zur Entfernungsbestimmung, nicht aber ein gattungsgemäßes Verfahren zum Schutz eines Fahrzeugs gegen Kollisionen bzw. ein entsprechend ausgestaltetes, kollisionsgeschütztes Fahrzeug. Demgemäß erfolgt auch hier wieder ein Abscannen. Eine flächige Aufnahme ist nicht vorgesehen.

Bei dem optischen Detektions- und Entfernungsbestimmungssystem nach der US-A-4 119 379 wird mittels einer gepulsten Laserlichtquelle eine Linie im Sichtfeld beleuchtet.

Mittels einer mechanischen Abtastanordnung wird das Sichtfeld abgetastet und zeilenweise auf den Detektor in Form einer Fernsehröhre übertragen. Dies mag zwar zur Betrachtung ein schönes Bild auf dem Bildschirm geben, wenn ein Versatz in der projizierten Linie gegeben ist. Eine Verarbeitung der mechanisch nacheinander durch Abtastung erhaltenen Empfangssignale ist aber aus diesem Grunde mit großer Verzögerung und daher nur langsam möglich. Eine schnelle, sichere Erkennung eines Hindernisses kann diese Druckschrift nicht leisten, wofür sie auch nicht vorgesehen ist. Eine Verarbeitung der empfangenen Signale bei dieser Druckschrift zur Steuerung eines Fahrzeugs - wozu eben der Gegenstand dieser Druckschrift auch nicht vorgesehen ist - und insbesondere zum Stillsetzen des Fahrzeugs wäre mit erheblichem Aufwand verbunden.

Der Erfindung liegt die Aufgabe zugrunde, ausgehend von dem vorgenannten Stand der Technik die genannten Nachteile zu vermeiden und ein zuverlässiges Verfahren sowie eine zuverlässige Vorrichtung anzugeben, die einen sicheren Kollisionsschutz bewirken.

Erfindungsgemäß wird die genannte Aufgabe durch ein Verfahren zum Schutz eines Fahrzeugs gegen Kollisionen gelöst, wobei der Fahrweg des Fahrzeugs vor diesem beleuchtet wird und das reflektierte Licht zur Erzeugung von Steuerbefehlen detektiert wird, welches dadurch gekennzeichnet ist, daß auf den Boden vor dem Fahrzeug ein in einer sich mit einer Erstreckungskomponente quer zur Fahrtrichtung erstreckenden Auftrefflinie auftreffender Lichtvorhang gerichtet wird und daß der Auftreffbereich mittels einer Kamera beobachtet wird. Ein erfindungsgemäßes kollisionsgeschütztes, insbesondere fahrerloses Fahrzeug mit einer Kollisionsschutzeinrichtung mit einer Lichtquelle, dessen Licht zumindestens nach Auftritt aus dem Fahrzeug schräg zum Boden hin gerichtet ist, mit einem Empfänger für vom Boden reflektiertes Licht und einer diesem nachgeordneten Auswerteeinrichtung, wobei die Lichtquelle ein Laser ist, zeichnet sich dadurch aus, daß eine vollzylindrische Linse exzentrisch zu dem Laserstrahl bzw. den Laserstrahlen, also mit ihrer Zentralachse außerhalb des Strahles bzw. der Strahlen, aber im Laserlicht angeordnet ist, die das Licht derart in einem Lichtvorhang auf den Boden wirft, daß es auf diesem in einer Auftrefflinie auftrifft und daß der Empfänger eine den Auftrefflinienbereich des Laserlichts auf dem Boden überwachende Kamera ist.

Die Erfindung sieht die Erzeugung eines schräg auf den Boden vor dem Fahrzeug gerichteten kontinuierlichen Lichtvorhangs oder einer durchgehenden Lichtfläche vor, der bzw. die auf dem Boden im wesentlichen in einer quer zur Fahrtrichtung verlaufenden Linie auftrifft. Die Linie kann teilbogenförmig geführt sein, um so unabhängig vom Beobachtungswinkel relativ zur Fahrtrichtung den gleichen Abstand der Auftrefflinie zum Fahrzeug zu erreichen. Die Auftrefflinie wird durch eine Videokamera beobachtet. Befindet sich im Beobachtungsbereich ein dunkler Gegenstand, so wird die Linie an seiner Stelle unterbrochen. Befindet sich ein heller, lichtreflektierender Gegenstand im Fahrweg, so ergibt sich ein Versatz des von diesem reflektierten Bereichs des Lichtsvorhangs gegenüber der Auftrefflinie des Lichtvorhangs auf dem Boden. Beide Fälle werden mittels des erfindungsgemäßen Verfahrens festgestellt und können zu einer Steuerung, insbesondere einer Stillsetzung des Fahrzeugs genutzt werden.

Die Eigensicherheit des erfindungsgemäßen Vorgehens ist dadurch gewährleistet, daß bei Ausfall der Lichtquelle ebenso wie der Kamera die Auswerteelektronik kein (ungestörtes) Signal erhält; in diesem Fall kann der Antrieb des Fahrzeugs angehalten werden. Aufgrund einer Dejustierung von Senderoptik oder Empfänger erfolgt eine Verschiebung des von der Kamera aufgenommenen Auftreffbereichs des Lichts gegenüber einem vorgegebenen Bereich, was ebenfalls dazu genutzt werden kann, den Antrieb des Fahrzeugs nicht in Betrieb zu setzen bzw. stillzusetzen.

Wird in bevorzugter Ausgestaltung eine Laserdiode verwendet, die insbesondere im Hinblick auf sicherheitstechnische Anforderungen eine gewünschte geringe Leistung enthält, so kann weiterhin in bevorzugter Ausgestaltung vorgesehen sein, daß eine zwischen Laserdiode und vollzylindrischer Linse angeordnete Fokusierlinse eine Zylindersammellinse ist. Eine bogenförmige Ausgestaltung der Auftrefflinie des Lichtvorhangs auf dem Boden kann dadurch erreicht werden, daß die vollzylindrische Linse unter einem Winkel von ungleich 90 Grad zum auf sie auftreffenden Laserstrahl ausgerichtet wird.

Wenn von einer vollzylindrischen Linse gesprochen wird, so ist damit nicht gemeint, daß diese vollständig massiv ausgebildet ist, sondern daß die Linse im Gegensatz zu herkömmlichen Zylindersammellinsen einen vollen Zylinder bildet. Eine solche Linse ist grundsätzlich an sich aus der US-A-4 184 748 bekannt, worauf ausdrücklich verwiesen wird. Sie kann in bevorzugter Ausgestaltung derart ausgebildet sein, daß die vollzylindrische Linse ein Hohlrohr wie ein zylindrisches Glasröhrchen ist. Bevorzugte Ausgestaltungen sehen vor, daß jeweils ein Laser auf jeder Seite einer Diagonalebene der vollzylindrischen Linse angeordnet ist, daß die Laser symmetrisch zur Diagonalebene der Linse angeordnet sind und daß die Laser unter dem gleichen Winkel zur Zentralachse, d.h. der Symmetrieachse unendlichzähliger Symmetrie der Zylinderlinse ausgerichtet sind.

Um den fremdlichen Einfluß vollständig auszuschalten, kann gegebenenfalls in bevorzugter Ausgestaltung vorgesehen sein, daß der Laser getaktet ist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Figur 1: eine schematische Darstellung eines erfindungsgemäß ausgerüsteten Fahrzeugs;
- Figur 2: eine Seitenansicht der Anordnung und Ausrichtung der erfindungswesentlichen Beleuchtungs- und Aufnahmeteile;
- Figur 3: eine Aufsicht entsprechend dem Pfeil III der Figur 2;
- Fig. 4a-4d: Bildschirm- und Oszilloskopdarstellungen des von der Kamera gem. Fig.2 aufgenommenen Bildes ohne und mit Stirnenobjekten; und
- Figur 5: ein Schaltbild der Auswerteeinheit.

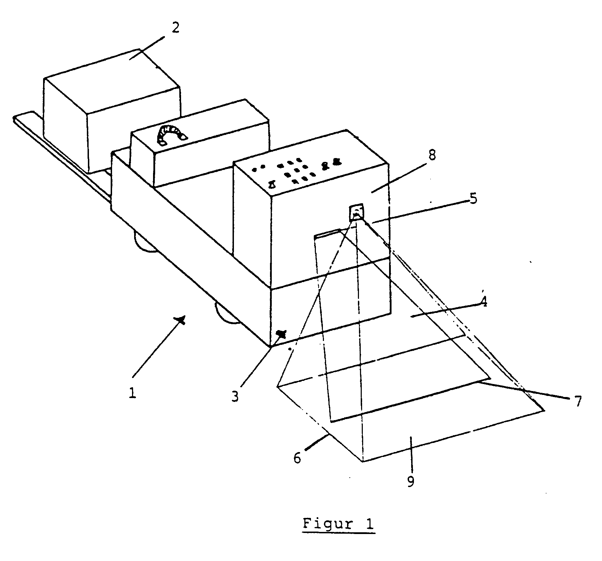

Figur 1 zeigt schematisch ein fahrerloses Fahrzeug, wie es in Lagern, Lagerhallen oder dergleichen eingesetzt wird. Es handelt sich dabei beispielsweise um ein Förderfahrzeug, das in einem Lager entlang der dort gegebenen Lagerstraßen zwischen Be- und Entladeplätzen verfährt und Lagergut 2 von und zu Lagerplätzen transportiert. Gegebenenfalls kann dabei das Fahrzeug 1 in bekannter Weise zweiteilig, nämlich als Hauptförderfahrzeug mit abtrennbarem Satellitenfahrzeug ausgebildet sein.

Das Fahrzeug 1 weist an seiner Vorderseite 3 eine Beleuchtungseinheit auf, die einen Lichtvorhang 4 erzeugt, der aus einem Lichtaustritt 5, wie einem Schlitz an der Vorderseite des Fahrzeugs austritt und schräg auf den Boden 6, auf dem das Fahrzeug fährt, gerichtet ist und auf diesen in einer Linie 7 auftrifft.

Der Lichtvorhang 4 muß nicht, wie im dargestellten Ausführungsbeispiel, eine Schrägebene sein, die in einer geraden Auftrefflinie 7 auf den Boden 6 auftrifft. Der Lichtvorhang kann auch kegelteilförmig gekrümmt sein und entsprechend in einer, vom Fahrzeug aus betrachtet, konkaven Linie auf dem Boden auftreffen.

Der Bereich der Auftrefflinie 7 des Lichtvorhangs 4 auf dem Boden 6 wird durch eine ebenfalls in der Vorderseite 3 des Fahrzeugs angeordnete Kamera 8 überwacht, die ebenfalls schräg auf den Boden gerichtet ist und einen Überwachungsbereich 9 beobachtet, der die Auftrefflinie 7 des Lichtvorhangs 4 einschließt. Vor der Kamera 8 kann vorzugsweise ein Filter, wie ein Interferenzfilter angeordnet sein, welcher nur Licht der Wellenlänge des Lichtsenders durchläßt, um so störendes Umgebungslicht weitgehend auszufiltern und das Signal-Rausch-Verhältnis zu verbessern.

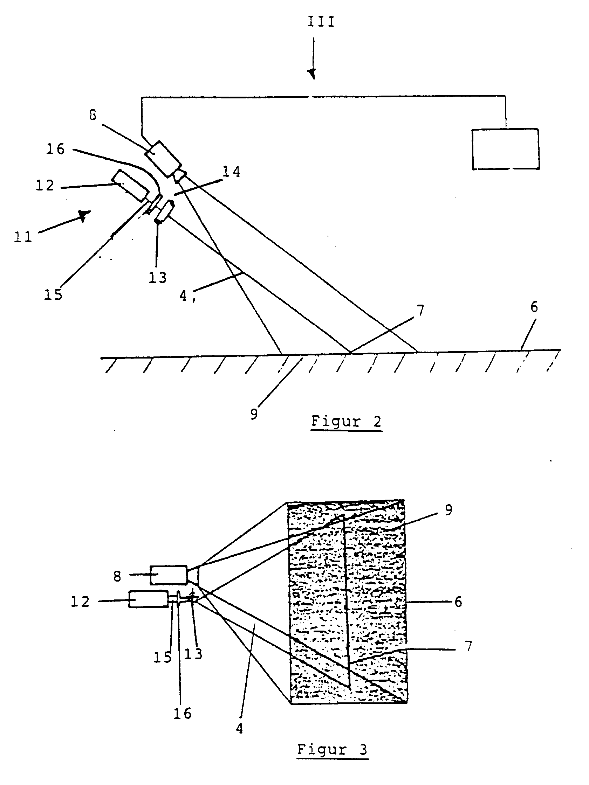

Die Beleuchtungseinheit 11 weist im dargestellten Ausführungsbeispiel einen Laser 12, vorzugsweise eine Halbleiter-Laserdiode auf, der bzw. die unter einem spitzen Winkel schräg zur Bodenfläche 6, auf der das Fahrzeug 1 verfährt, gerichtet ist (Figur 2). Vor dem Laser 12 ist eine vollzylindrische Linse 13 in Form eines transparenten Röhrchens, insbesondere Glasröhrchens angeordnet, dessen Symmetrie- oder Zentralachse 14 senkrecht zur Achse des Laserstrahls 15 steht und in einer Ebene senkrecht zur Bodenfläche 6 liegt. Hierdurch wird der ebene Lichtvorhang 4 und die gerade Auftrefflinie 7 gebildet. Durch eine vom rechten Winkel abweichende Anstellung der Linse 13 gegenüber der Laserstrahlrichtung 15 kann ein teilkegelförmiger Lichtvorhang und damit eine bogenförmige Auftrefflinie erzeugt werden.

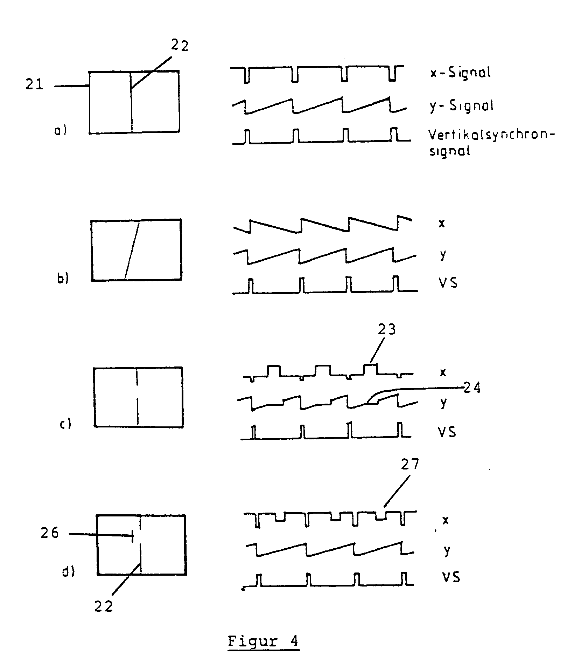

Zwischen Laser 12 und Linse 13 ist eine Fokusierungslinse in Form einer Zylindersammellinse 16 angeordnet, die den Laserstrahl auf die Oberfläche der vollzylindrischen Linse 13 fokusiert. Die größte Breitenerstreckung des aus der Laserdiode austretenden kollimierten Laserstrahls liegt dabei gegebenenfalls parallel zum Boden 6. Die Achse der Zylindersammellinse 16 steht senkrecht zu dieser größten Breitenerstreckung, verläuft also in Richtung der geringeren Höhe des aus der Diode austretenden Strahls 15 (Figuren 2 und 3).

Schließt man an den Ausgang der Kamera einen Monitor bzw. an eine am Ausgangssignal der Kamera 8 ein X- und ein Y-Signal ableitende Verarbeitungseinheit ein Oszilloskop an, so ergeben sich die in den Figuren 4a bis d dargestellten Darstellungen. Hierbei ist zu beachten, daß die Kamera gegenüber ihrer üblichen Halteposition um ihre optische Achse um 90 Grad verschwenkt angeordnet ist, wodurch die horizontale Auftrefflinie 7 auf dem Boden 6 als vertikale Linie 22 auf dem Bildschirm 21 dargestellt wird (Figur 4a). Liegt die Linie 7 genau senkrecht zur Verfahrrrichtung des Fahrzeugs (und damit die Linie 22 senkrecht auf dem Monitor 21), so stellt das rechts in Figur 4a oben dargestellte X-Signal der Auswerteeinheit eine konstante Spannung dar. Ein Bildschirmbild ist dabei in der rechten Darstellung der Figur 4 der Bereich zwischen zwei Spitzen des Vertikalsynchronsignals, das separat auf der dritten Linie jeder Teilfigur 4a bis 4d aufgetragen ist. Das Y-Signal (zweite Linie in den Teilfiguren rechts) stellt bei der gewählten Auswertung (die weiter unten erläutert wird) eine Sägezahnspannung zwischen den Peaks des Vertikalsynchronsignals dar.

Verläuft die Linie 7 schräg zur Verfahrrichtung des Fahrzeugs (Figur 4b) so stellt auch das X-Signal eine Sägezahnlinie dar.

Befindet sich vor dem Fahrzeug ein dunkler Gegenstand, der verhindert, daß die Linie 7 auf dem Boden 6 vollständig von der Kamera 8 gesehen wird, die Linie 22 auf dem Bildschirm also eine Unterbrechung aufweist (Figur 4c), so geht der (invertierte) Ausgang der Spannung in den Bereichen (Zeilen des Bildschirm), in denen kein Lichtfleck vorhanden ist, auf den maximalen Spannungspegel (mit 23 bezeichnet). Im Y-Signal wird in diesem Bereich der Wert gehalten, der der Position des letzten, noch erkannten Lichtflecks entspricht: Der Sägezahnanstieg des Y-Signals wird also durch ein Plateau 24 unterbrochen.

Befindet sich im Beobachtungsbereich 9 der Kamera 8, vor der Auftrefflinie des Lichtvorhangs 4 auf dein Boden 6 ein helles, reflektierendes Objekt, so sieht die Kamera einen zur Linie 7 (und deren Bildschirmabbildung 22) in X-Richtung versetzten Teilstrich 26 (Figur 4d, links), ist im X-Signal ein Einbruch zu erkennen (Figur 4d, rechts).

Von Vorteil ist der Einsatz eines zweidimensionalen Detektorelements, vorzugsweise wird eine CCD-Kamera eingesetzt. Die durch Lichteinfall erzeugten Ladungen in den einzelnen Zellen einer solchen Kamera werden zeilenweise ausgegeben. Die Taktung erfolgt mittels Horizontal- und Vertikalsynchronsignalen. Die Vertikalsynchronsignale kennzeichnen den Beginn und das Ende eines Bildes, während die Horizontalsynchronsignale Anfang und Ende einer Zeile des Bildsensors kennzeichnen.

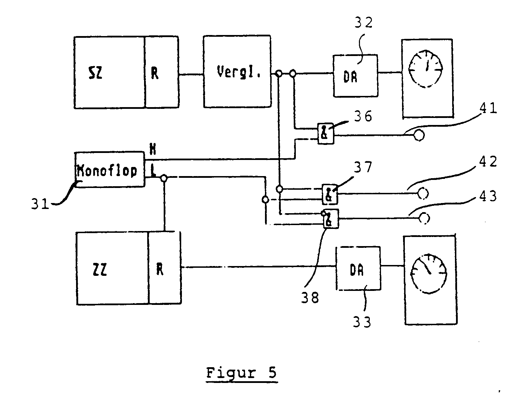

Letzteres wird zur Synchronisation eines Spaltenzählers SZ (Figur 5) benutzt, der wesentlich schneller als die Horizontalfrequenz getaktet wird. Der Beginn eines neuen Bildes wird durch das Vertikalsynchronsignal festgelegt und ein Zeilenzähler ZZ gestartet, der durch das Horizontalsynchronsignal inkrementiert wird, das heißt bei jeder neuen Zeile wird der Zeilenzähler um eine Stufe erhöht.

Die Zähler SZ und ZZ zählen so lange, bis ein Lichtfleck erkannt wird. Das Auftauchen des Lichtflecks bewirkt eine Übernahmedes aktuellen Standes in die Register, die den Zählern angeschlossen sind. Der Spaltenzähler SZ gibt dann an, in welcher Spalte der Lichtfleck auftritt, der Inhalt des Zeilenzählers ZZ gibt Aufschluß darüber, in welcher Zeile der Lichtfleck sich befindet. Eine Digital-Analogwandlung der Registerstände hatte als Ergebnis zwei Analogspannungen als X-Signal und Y-Signal mit dem oben unter Bezug auf die Oszilloskopdarstellung gegebenen Verlauf (bei senkrechter ununterbrochener Linie bleibt der X-Wert konstant, der Registerinhalt des Zeilenzählers ZZ wird von Zeile zu Zeile größer, wodurch sich die Sägezahnspannung ergibt).

Im Falle einer geraden Lichtspur quer zur Fahrtrichtung genügt im Prinzip ein einzeiliges Detektorelement. Die Lichtspur wird über eine Linse oder ein Linsensystem (Objektiv) auf das Detektorelement abgebildet. Ein Kriterium für das Vorhandensein eines Hindernisses ist das Fehlen der Signale einzelner Elemente innerhalb der Detektorzeile. Dies kann besonders einfach über einen Amplitudendiskriminator beim Auslesen der Zeile erkannt und zur Anzeige bzw. zur Betätigung eines Alarms gebracht werden.

Hierbei ist die Abbildung der Lichtspur auf die Detektorzeile etwas größer als die Dicke der Zeilenelemente, was gegebenenfalls durch die optische Anordnung ohne weiteres erreicht werden kann.

Zur korrekten Grundeinstellung der beobachteten Auftrefflinie 7 gehört eine bestimmte Spaltennummer, gegebenenfalls mit einem Toleranzbereich, in der sich der Lichtfleck befinden muß. Wird diese Spaltennummer in einem rückwärts zählenden Spaltenzähler SZ mit "0" belegt, so wird bei Auftreten eines Lichtflecks vor der Normspalte "0" der Zähler gestoppt und der Registerinhalt ausgelesen. Der im Register befindliche Wert entspricht dem X-Abstand, um den der aufgefundene Strahl verschoben ist. Über die Digital-Analogwandlung entsteht das fragliche analoge X-Signal des Ausgangs und dieses weist gegenüber der ungestörten Darstellung entsprechende sprunghafte Änderungen in Form von Einbrüchen 27 auf.

Eine Möglichkeit der Überwachung der Strahlposition in einem vorgegeben Toleranzbereich kann im Falle einer geraden Lichtspur mit Hilfe einer Verzögerungsschaltung, insbesondere eines Monoflops 31 erfolgen. Es bleibt so lange in seinem instabilen Zustand wie der zeitliche Abstand zwischen Lichtpunkt und zwei aufeinanderbleiber Zeilen unterhalb der eingestellten Verzögerungszeit bleibt, d.h. so lange entlang der Linie 22 (Figur 4) das Lichtsignal auftritt. Verzögert sich das Auftreten des Lichtflecks, so kehrt die Schaltung in ihren stabilen Zustand zurück. Dieser Zustandswechsel zeigt damit an, daß sich der Lichtstrahl außer halb seiner vorgegebenen Toleranzgrenzen bewegt oder unterbrochen wird.

Das Abfallen des Monoflops stoppt den Zeilenzähler ZZ, der durch das Horizontalsignal inkrementiert wird. Der Registerinhalt entspricht der Nummer der Zeile, in der der Strahl versetzt oder unterbrochen ist. Der Ausgang wird über einen Digital-Analogwandler 33 (Figur 5) in das analoge Y-Signal des Hindernisses umgewandelt.

Durch logische Verknüpfung mittels UND-Gliedern 36 bis 38 der Ausgänge des Monoflops 31 und des Spaltenzählers SZ kann die Art der Störung charakterisiert werden. Liegt im Register des Spaltenzählers SZ ein von "0" verschiedenes Signal - Verschiebung gegenüber der Linie 7,22 - an, ist aber gleichzeitig das Monoflop mit seinem genannten Ausgang auf Hoch-Pegel, also in seinem instabilen Zustand, so bedeutet dies, daß die Linie 7, 22 zwar durchgehend vorhanden ist (Zustand des Monoflops), sich aber nicht in der vorgegebenen Soll-Position befindet (Inhalt des Spaltenzählers SZ). Die UND-Verknüpfung dieser beiden Bedingungen führt zur Anzeige eines Signals "Grundeinstellung nicht korrekt" über eine Signalleitung 41, mittels deren beispielsweise das Fahrzeug stillgestellt werden kann. Hierdurch ist die Eigensicherheit des erfindungsgemäßen Überwachungsverfahrens gegeben.

Das Anstehen eines von "0" verschiedenen X-Signals im Spaltenzähler, selbst bei gleichzeitigem Niedrig-Pegel des Monoflops, signalisiert einen Versatz im Strahlverlauf (Bild 4d), wenn die Bedingungen gemeinsam erfüllt sind. Dies wird über das UND-Gatter 37 festgestellt und über eine Signalleitung 42 ein entsprechendes Signal ausgegeben.

Ist der Strahl nicht nur versetzt, sondern vollständig unterbrochen, so wird der Spaltenzähler SZ in den entsprechenden Zeilen nicht gestoppt; es steht also auch kein dem X-Signal entsprechender Registerinhalt an. Die Umverknüpfung des negierten X-Signals mit dem Niedrig-Pegel-Ausgang des Monoflops im UND-Gatter 37 ergibt ein Ausgangssignal "Strahlunterbrechung über die Signalleitung 43".

Mit der Schaltung können im Falle einer geraden Lichtspur alle auftretenden Störungsarten analysiert werden; über die Verknüpfung der Zählerinhalte und den Zustand des Monoflops - und die Position des Hindernisses über die gegebenenfalls analog gewandelten Zählerinhalte - festgestellt werden.

Im Falle einer gekrümmten Lichtspur wird der Bildinhalt des Sollverlaufs (= kein Hindernis) mit Hilfe der Zähler SZ und ZZ erfaßt und einmalig abgespeichert. Dadurch steht für jede Zeile ein zugeordneter Sollwert für den Spaltenzahler zur Verfügung. Im Einsatz wird in jedem Bild ein Vergleich der aktuellen Lichtfleckposition im Spaltenzähler mit der zugehörigen Sollposition Zeile für Zeile durchgeführt. Beim Überschreiten der vorgegebenen Toleranzgrenzen (=Hindernis) wird ein Alarm ausgelöst. Diese Art der Signalverarbeitung im Echtzeitbetrieb ist mit einfachsten Mitteln an Hard- und Software möglich; die sonst in der klassischen Bildverarbeitung übliche Merkmalsextraktion geschieht hier bereits durch die Art der Bildaufnahme.

## Patentansprüche

1. Verfahren zum Schutz eines Fahrzeugs gegen Kollisionen, wobei der Fahrweg des Fahrzeugs vor diesem von einer Laserlichtquelle beleuchtet wird und das reflektierte Licht zur Erzeugung von Steuerbefehlen detektiert wird, dadurch gekennzeichnet, daß auf den Boden vor dem Fahrzeug ein in einer sich mit einer Erstreckungskomponente quer zur Fahrtrichtung erstreckenden Auftrefflinie (7) auftreffender Lichtvorhang (4) gerichtet wird und daß der Auftreffbereich mittels einer Kamera (8) beobachtet wird.

2. Kollisionsgeschütztes, insbesondere fahrerloses Fahrzeug, mit einer Kollisionsschutzeinrichtung mit einer Lichtquelle (12), dessen Licht zumindestens nach Austritt aus dem Fahrzeug schräg zum Boden hin gerichtet ist, mit einem Empfänger für vom Boden reflektiertes Licht und einer diesem nachgeordneten Auswerteeinrichtung, wobei die Lichtquelle (12) ein Laser ist, dadurch gekennzeichnet, daß eine vollzylindrische Linse (13) exzentrisch zu dem Laserstrahl bzw. den Laserstrahlen, also mit ihrer Zentralachse außerhalb des Strahles bzw. der Strahlen, aber im Laserlicht (4) angeordnet ist, die das Licht derart in einem Lichtvorhang auf den Boden wirft, daß es auf diesem in einer Auftrefflinie (7) auftrifft und daß der Empfänger eine den Auftrefflinienbereich des Laserlichts (4) auf dem Boden (9) überwachende Kamera (8) ist.

3. Fahrzeug nach Anspruch 2, dadurch gekennzeichnet, daß der oder die Laser (12) unter einem Winkel ungleich 90 Grad zur Zentralachse der Linse (13) ausgerichtet sind.

4. Fahrzeug nach einem der Ansprüche 2 oder 3, dadurch gekennzeichnet, daß jeweils ein Laser auf jeder Seite einer die Zentralachse der vollzylindrischen Linse (13) beinhaltenden Diagonalebene derselben angeordnet ist.

5. Fahrzeug nach Anspruch 4, dadurch gekennzeichnet, daß die Laser symmetrisch zur Diagonalebene der Linse (13) angeordnet sind.

6. Fahrzeug nach einem der Ansprüche 4 oder 5 und nach Anspruch 3, dadurch gekennzeichnet, daß die Laser (12) unter dem gleichen Winkel zur Symmetrieachse der Linse (13) ausgerichtet sind.

7. Fahrzeug nach einem der Ansprüche 2 bis 6, dadurch gekennzeichnet, daß der Laser eine Laserdiode (12) ist.

8. Fahrzeug nach einem der Ansprüche 2 bis 7, dadurch gekennzeichnet, daß zwischen Laser (12) und vollzylindrischer Linse (13) eine Fokusierlinse (16) angeordnet ist.

9. Fahrzeug nach Anspruch 7 und 8, dadurch gekennzeichnet, daß die Fokusierlinse (16) eine Zylindersammellinse ist.

10. Fahrzeug nach einem der Ansprüche 2 bis 9, dadurch gekennzeichnet, daß die vollzylindrische Linse ein Hohlrohr ist.

11. Fahrzeug nach einem der Ansprüche 2 bis 10, dadurch gekennzeichnet, daß Laser (12) und die Kameraempfangsbereitschaft synchron getaktet sind.

12. Fahrzeug nach Anspruch 11, dadurch gekennzeichnet, daß vor der Kamera (8) ein elektrooptischer Schalter zum Takten der Kameraempfangsbereitschaft angeordnet ist.

## Claims

1. Method for protecting a vehicle against collisions, in which the route in front of the vehicle is illuminated by a laser light source and the reflected light is detected for producing control instructions, characterized in that onto the ground, in front of the vehicle, is directed a light curtain (4) impacting in an impact line (7) extending with an extension component transversely to the direction of travel and that the impact area is observed by means of a camera (8).

2. Collision-protected, particularly driver less vehicle, with a collision protection device having a light source (12), whose light, at least after passing out of the vehicle, is directed in inclined manner with respect to the ground, with a receiver for the light reflected from the ground and an evaluating device following the same, the light source (12) being a laser, characterized in that a completely cylindrical lens (13) is arranged eccentrically to the laser beam or beams, i.e. with its central axis outside the beam or beams, but in the laser light (4), which projects the light in a light curtain on the ground in such a way that it strikes the same in an impact line (7) and that the receiver is a camera (8) monitoring the impact line area of the laser light (4) on the ground (9).

3. Vehicle according to claim 2, characterized in that the laser or lasers (12) are oriented at an angle unequal to 90° to the central axis of the lens (13).

4. Vehicle according to one of the claims 2 or 3, characterized in that in each case one laser is positioned on each side of a diagonal plane containing the central axis of the completely cylindrical lens (13).

5. Vehicle according to claim 4, characterized in that the lasers are positioned symmetrically to the diagonal plane of the lens (13).

6. Vehicle according to one of the claims 4 or 5 and according to claim 3, characterized in that the lasers (12) are oriented under the same angle to the axis of symmetry of the lens (13).

7. Vehicle according to one of the claims 2 to 6, characterized in that the laser is a laser diode (12).

8. Vehicle according to one of the claims 2 to 7, characterized in that a focussing lens (16) is located between the lasers (12) and the fully cylindrical lens (13).

9. Vehicle according to claim 7 and 8, characterized in that the focussing lens (16) is a cylindrical collecting lens.

10. Vehicle according to one of the claims 2 to 9, characterized in that the completely cylindrical lens is a hollow tube.

11. Vehicle according to one of the claims 2 to 10, characterized in that the lasers (12) and the camera reception readiness are synchronously timed.

12. Vehicle according to claim 11, characterized in that upstream of the camera (8) is located an electrooptical switch for timing the camera reception readiness.

## Revendications

1. Procédé de protection d'un véhicule contre les collisions, selon lequel la route s'étendant devant le véhicule est éclairée par une source de lumière à laser et selon lequel la lumière réfléchie est détectée pour générer des commandes de conduite, caractérisé en ce qu'une nappe de lumière (4) dont la ligne d'incidence s'étend transversalement à la direction de marche est dirigée vers le sol devant le véhicule et en ce que la zone d'incidence est observée à l'aide d'une caméra (8).

2. Véhicule, en particulier véhicule sans conducteur, comprenant un dispositif de protection contre les collisions à source lumineuse, dont la lumière est dirigée obliquement vers le sol, du moins à sa sortie du véhicule, ainsi qu'un dispositif récepteur pour la lumière réfléchie par le sol et un dispositif de traitement des données monté derrière le dispositif récepteur, la source lumineuse (12) étant un laser, caractérisé en ce qu'une lentille (13) entièrement cylindrique est montée excentrée par rapport au faisceau laser, son axe central passant en-dehors du faisceau, mais dans la lumière du laser (4), lentille projetant la lumière sur le sol en une nappe lumineuse de sorte que la lumière frappe le sol en une ligne d'incidence (7), et en ce que le récepteur est une caméra (8) surveillant la zone de la ligne d'incidence de la lumière du laser (4) sur le sol (9).

3. Véhicule selon la revendication 2, caractérisé en ce que le ou les lasers (12) est ou sont dirigé(s) selon un angle différent de 90 degrés par rapport à l'axe central de la lentille (13).

4. Véhicule selon l'une des revendications 2 ou 3, caractérisé en ce que, de chaque côté du plan diagonal de la lentille (13) entièrement cylindrique renfermant l'axe central de celle-ci, est monté un laser.

5. Véhicule selon la revendication 4, caractérisé en ce que les lasers sont disposés symétriquement par rapport au plan diagonal de la lentille.

6. Véhicule selon l'une des revendications 4 ou 5 et selon la revendication 3, caractérisé en ce que les lasers (12) sont orientés selon un angle identique par rapport à l'axe de symétrie de la lentille.

7. Véhicule selon l'une des revendications 2 à 6, caractérisé en ce que le laser est une diode laser (12).

8. Véhicule selon l'une des revendications 2 à 7, caractérisé en ce qu'entre le laser (12) et la lentille entièrement cylindrique (13) est montée une lentille de focalisation.

9. Véhicule selon les revendications 7 et 8, caractérisé en ce que la lentille de focalisation (16) est une lentille cylindrique de convergence.

10. Véhicule selon l'une des revendications 2 à 9, caractérisé en ce que la lentille entièrement cylindrique est un tube creux.

11. Véhicule selon l'une des revendications 2 à 10, caractérisé en ce que le laser (12) et le déclenchement de fonctionnement de la caméra sont synchronisés.

12. Véhicule selon la revendication 11, caractérisé en ce que devant la caméra (8) est monté un interrupteur électro-optique pour la synchronisation du déclenchement de fonctionnement de la caméra.
